Europäisches Patentamt

European Patent Office

Office européen des brevets

(11) Publication number: **0 328 211**
**A1**

## EUROPEAN PATENT APPLICATION

(21) Application number: 89200266.8

(51) Int. Cl.⁴: **G11B 5/53 , G11B 5/588**

(22) Date of filing: 04.02.89

(30) Priority: 10.02.88 NL 8800322

(43) Date of publication of application:
**16.08.89 Bulletin 89/33**

(84) Designated Contracting States:
**AT DE ES FR GB IT**

(71) Applicant: **N.V. Philips' Gloeilampenfabrieken**
**Groenewoudseweg 1**
**NL-5621 BA Eindhoven(NL)**

(72) Inventor: **Sastra, Budiman**
**c/o INT. OCTROOIBUREAU B.V. Prof.**
**Holstlaan 6**
**NL-5656 AA Eindhoven(NL)**
Inventor: **Renders, Martinus Adrianus**
**c/o INT. OCTROOIBUREAU B.V. Prof.**
**Holstlaan 6**
**NL-5656 AA Eindhoven(NL)**

(74) Representative: **Steenken, Jacob Eduard et al**
**INTERNATIONAAL OCTROOIBUREAU B.V.**
**Prof. Holstlaan 6**
**NL-5656 AA Eindhoven(NL)**

(54) **Pivotable rotatable magnetic head unit.**

(57) A rotary magnetic-head unit (1) comprises a lower (2) and an upper (12) stationary drum and a central (3) rotatable cylindrical drum. The cylinder wall (7) of the rotatable drum (3) is formed with openings (6) in which magnetic heads (4) are movable. These magnetic heads (4) are rigidly connected to a magnetic-head support (5) which is supported on a pivotable shaft (8) and which is connected to the rotatable drum (3) via flexible coupling members (9). By means of a flexible pivot (10) the pivotable shaft (8) is connected to a rigid shaft (11). The degree of tilting is controlled by a limiting mechanism (13) comprising a plate (14) which is connected to the frame (19) via two parallel arms (17, 18) of equal length and which has an opening which is bounded by two V-shaped bounding walls (15, 16) which act as stops relative to which the pivotable shaft (8) can be positioned.

FIG.1

Xerox Copy Centre

# Pivotable rotatable magnetic head unit.

The invention relates to a rotatable magnetic head unit for recording and/or reproducing signals on/from a magnetic tape, which head unit comprises at least one stationary and one rotatable cylindrical drum, which rotatable drum is radially supported and is coaxial with the stationary drum, which rotatable drum comprises at least one magnetic head, which magnetic head is rigidly connected to a head support, which head support is pivotable by pivoting a shaft and is also rotatable.

Such a head unit is disclosed in EP 0,239,947 A2. In this known head unit the head support is pivotable in order to enable the information track on the magnetic tape to be scanned correctly in the slow-motion and fast-motion information reproduction modes. The problem which then occurs resides in the fact that during fast or slow reproduction another relative head-tape speed is obtained than during recording. During recording and reproduction the signal tracks are written on or read from the magnetic tape at a specific angle. During fast or slow reproduction the tape speed is changed. When the speed of rotation of the magnetic heads is not changed the path of the heads over the tape will be inclined at a different angle. This leads to incorrect reproduction. In order to preclude this, said angle must be corrected. This is effected by pivoting the axis of rotation of the heads about an axis which extends through the axis of rotation of the drum and through the centre of the contact area of the tape with the drum.

In this head unit the magnetic-head support is fixedly connected to a secondary shaft which is pivotable and whose lower end portion is supported in a recess in a primary drive shaft, the upper end portion of the secondary shaft being supported in an arm which dictates the tilting angle. The secondary shaft is coupled to the primary shaft by means of a ball pivot. The secondary shaft is pivotable relative to the primary shaft about this ball pivot shaft and the secondary shaft is also driven by the primary shaft via this ball pivot. During rotation slip occurs in the ball pivot as soon as the secondary shaft is inclined relative to the primary shaft. This leads to increased friction, resulting in wear and hence in bearing play, which in turn gives rise to deviations in the path of the magnetic head.

It is the object of the invention to provide a scanner in which the magnetic-head support is pivotable and which does not exhibit the above-mentioned bearing problem.

To this end the invention is characterized in that the head support is at least radially supported on the pivotable shaft.

This has the advantage that the bearing arrangement of the head support is more stable than in the known construction because the head support is supported directly on a stationary part, namely the shaft. As a result of this, the bearing construction is not constrained by other functions such as the function of pivot for the pivotal movement of the head support or the transmission of the rotary movement. This has the additional advantage that the mass of the scanner part which is rotatable at an angle to the horizontal is smaller, because now only the head support is rotated and not the tilted shaft. This reduces, the gyroscopic effects and the consequent load exerted on the bearing arrangement. A further advantage is that it is now also possible for the head support to be translated along the shaft.

A preferred embodiment of the magnetic head unit is characterized in that the head support is driven via the rotatable drum and in that the coupling between the head support and the rotatable drum is established by means of at least one coupling member which is rigid in at least the direction of rotation and which is flexible in at least a vertical direction. This coupling construction even provides a correct coupling between the head support and the drum if the angle and the distance between the two parts to be coupled changes.

A further preferred embodiment of the magnetic-head unit is characterized in that the pivot of the pivotable shaft takes the form of a flexible coupling member. The advantage of this pivot in the form of a flexible coupling member is that it produces hardly any friction and can be manufactured very easily.

Still another preferred embodiment of the magnetic-head unit is characterized in that the shaft carrying the head support is pivotable about any axis perpendicular to the axis of rotation of the rotatable drum. This has the advantage that in addition to the correct inclination of the head relative to the tape in the case of a change in tape speed it also enables the length over which the head projects from the drum to be changed. Thus, it is for example possible to interrupt the head-tape contact by tilting the heads away from the tape if such contact is not desired.

Yet another preferred embodiment of the magnetic-head unit is characterized in that the head support is radially and axially supported on the pivotable shaft. This enables any desired form of information track to be read or written. Moreover, a correction for extremely large deviations is now possible.

An embodiment of a magnetic-head unit in accordance with the invention will now be described in more detail, by way of example, with reference to the accompanying drawing. In the drawing:

Fig. 1 is a vertical sectional view of the magnetic-head unit,

Fig. 2 is a horizontal sectional view of the magnetic head unit taken on the line II-II in Fig. 1, and

Fig. 3 is a plan view of a mechanism for limiting the pivotal movement of the magnetic-head unit.

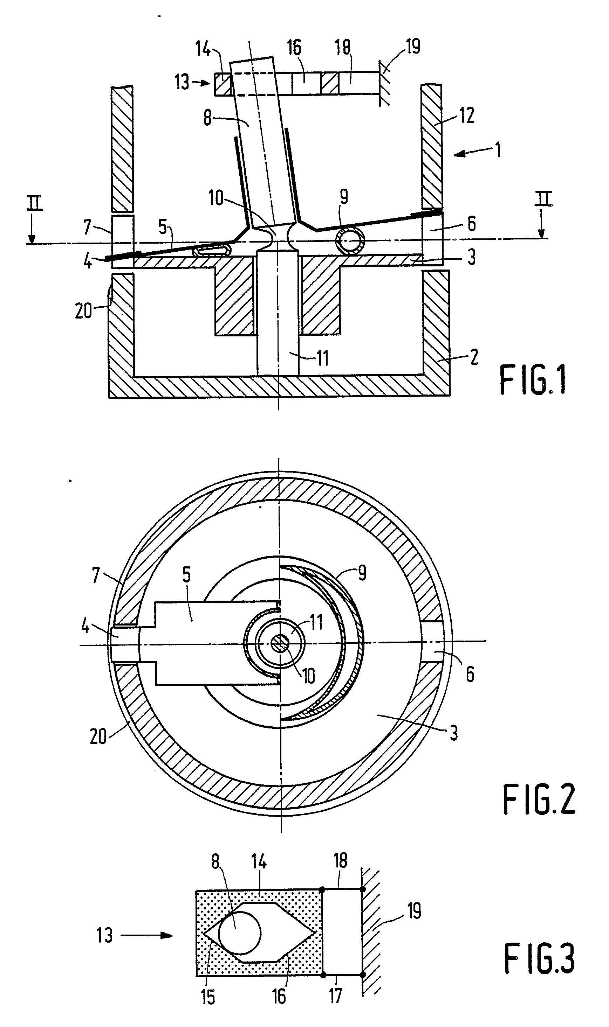

Fig. 1 is a vertical sectional view of an embodiment of a magnetic-head unit 1 in accordance with the invention. The magnetic-head unit 1 shown in Fig. 1 comprises a stationary cylindrical drum 2 whose outer wall is formed with a tape-guide edge 20 which guides a magnetic tape, not shown, along the drum wall. A rigid shaft 11 is fixedly connected to said drum 2 in the centre of the drum bottom. The central axis of this rigid shaft 11 coincides with the central axis of the drum 2. This shaft 11 supports a rotatable drum 3 by means of a bearing sleeve which is fixedly connected to the bottom of the drum 3, the bottom portion having a circular opening in its centre for the passage of the shaft 11.

In the wall 7 of the rotatable drum 3 two rectangular openings 6 are formed. In each of these openings 6 a magnetic head 4 is arranged to be vertically movable. The magnetic heads 4 are each rigidly connected to one end of a magnetic-head support 5. The magnetic-head support 5 comprises an elongate rectangular strip having a circular opening in its centre where it is provided with a cylindrical bearing sleeve which extends perpendicularly to the strip. The head support 5 is journalled on a shaft 8 by means of this bearing sleeve. The strip is connected to the rotatable drum 3 by means of a flexible ring 9 of circular cross-section, which ring 9 is flexible in radial and axial directions and is stiff in the tangential direction.

The shaft 8 is flexibly connected to the shaft 11, in such a way that the shaft 8 is pivotable about the flexible coupling member 10. The pivotal range of the shaft 8 is dictated by a limiting mechanism 13 comprising a plate 14 to which two arms 17, 18 are pivotally secured, which arms 17, 18 are pivotally connected to the stationary section 19 of the head unit 1. Said disc 14 has an opening for the passage of the shaft 8. This opening has two V-shaped bounding walls 15, 16 which act as stops.

The upper section of the head unit 1 is constituted by a second stationary cylindrical drum 2, which is concentric with the afore-mentioned drums 2, 3 and which has the same outer diameter as these drums 2 and 3.

How the head support can be pivoted will be explained hereinafter. During fast or slow reproduction the head support 5 must be pivoted. This is effected by pivoting the shaft carrying the head support 5 about an axis which extends through the axis of rotation of the drum 3 and through the centre of the contact area between the tape and the drum 3. This pivotal movement, which is effected through a small angle, is controlled by the limiting mechanism 13, in particular by the parallelogram mechanism constituted by the two arms 17, 18 of equal length, which pivotally connect the strip 14 to the frame 19.

In the standby mode the tape is stationary while the drum 3 with the head 4 keeps rotating. During this mode no head-tape contact is necessary and it is even desirable that there is no such contact in view of wear of the head 4 and the magnetic tape. For this purpose the head 4 can be tilted away from the tape-drum contact area via the head support 5. The operational and standby positions are defined by the two V-shaped stops 15, 16 which position the pivotable shaft 8. The mechanism which moves the shaft 8 and keeps it in the desired position is not shown because its construction depends on the environment in which the head unit is utilized.

As a result of the tilted position of the head support 5 relative to the drum 3 during fast or slow reproduction the distance between the two parts will vary during rotation. The coupling between the two parts should therefore be constructed in such a way that this variable distance does not give rist to problems. For this purpose a coupling 9 is provided which is flexible, in such a way that the coupling between the drum 3 and the head support 5 is maintained and that the coupling is rigid in the direction of rotation of the two parts.

The embodiment of the head unit described herein may comprise a different number of magnetic heads. The head support can be constructed in a manner, not shown, as a wheel to which the magnetic heads are connected along its circumference via arms, which magnetic heads can be translated in recesses formed in the drum wall. The outer diameter of the wheel should then be smaller than the inner diameter of the drum wall. Moreover, the upper drum can be mounted for rotation and for this purpose it can even be integrated with the rotatable drum. The air gap between the lower stationary drum and the rotatable drum can be formed so as to obtain an axial spiral-groove bearing for axially supporting the rotatable drum in a simple and stable manner.

The head unit may alternatively be constructed in such a way that the head support can be translated instead of pivoted or can perform a combination of the two movements. This can be achieved without any complications because the head support itself is supported directly on a shaft.

## Claims

1. A rotatable magnetic-head unit (1) for recording and/or reproducing signals on/from a magnetic tape, which head unit (1) comprises at least one stationary (2) and one rotatable (3) cylindrical drum, which rotatable drum (3) is radially supported and is coaxial with the stationary drum (2), which rotatable drum (3) comprises at least one magnetic head (4), which magnetic head (4) is rigidly connected to a head support (5), which head support (5), is pivotable by pivoting a shaft (8) and is also rotatable, characterized in that the head support (5) is at least radially supported on the pivotable shaft (8).

2. A magnetic-head unit (1) as claimed in claim 1, characterized in that the head support (5) is driven via the rotatable drum (3) and in that the coupling between the head support (5) and the rotatable drum (3) is established by means of at least one coupling member (9) which is rigid in at least the direction of rotation and which is flexible in at least the vertical direction.

3. A magnetic-head unit (1) as claimed in claim 1, characterized in that the pivot of the pivotable shaft (8) is constructed as a flexible coupling member (10).

4. A magnetic-head unit (1) as claimed in Claim 1, characterized in that the shaft (8) carrying the head support (5) is pivotable about any axis perpendicular to the axis of rotation of the rotatable drum (3).

5. A magnetic-head unit (1) as claimed in any one of the preceding Claims, characterized in that the head support (5) is radially and axially supported on the pivotable shaft (8).

FIG.1

FIG.2

FIG.3

PHN 12428

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 995 317 (SCHMIDT) <br> * Column 3, line 42 – column 4, line 31; figure 1 * | 1 | G 11 B 5/53 <br> G 11 B 5/588 |
| A | PATENT ABSTRACTS OF JAPAN, vol. 9, no. 76 (P-346)[1799], 5th April 1985; & JP-A-59 207 016 (MITSUBISHU DENKI K.K.) 24-11-1984 <br> * Abstract * | 1,2 | |
| A | US-A-4 446 497 (HIRAYAMA) <br> * Column 3, lines 1-33, line 58 – column 4, line 4; column 4, line 61 – column 5, line 11; figures 3,4,6,9,10 * | 1,2 | |
| A | PATENT ABSTRACTS OF JAPAN, vol. 9, no. 76 (P-346)[1799], 5th April 1985; & JP-A-59 207 018 (MITSUBISHI DENKI K.K.) 24-11-1984 <br> * Abstract * | 1,5 | |
| A | US-A-3 107 280 (SUETSUGU) <br> * Column 2, lines 12-19; figures 2,3 * | 1,2 | |

TECHNICAL FIELDS SEARCHED (Int. Cl.4)

G 11 B

The present search report has been drawn up for all claims

| Place of search | Date of completion of the search | Examiner |
|---|---|---|
| THE HAGUE | 17-05-1989 | FUX J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)